# EUROPEAN PATENT APPLICATION

(11) **EP 0 849 513 A2**
(43) Date of publication of application: **24.06.1998**
(21) Application number: 97122063.7
(22) Date of filing: 15.12.1997
(51) Int. Cl.: F16K 15/20

(54) **Valve particularly for inflatable dinghies**

(30) Priority: 18.12.1996 IT MI962655
(71) Applicant: Scoprega S.p.A., 20062 Cassano d'Adda (Milano) (IT)
(72) Inventor: Vecchi, Silvio, 24042 Capriate San Gervasio (IT)
(74) Representative: Modiano, Guido, Dr.-Ing.

(57) **Abstract**

A valve, particularly for inflatable dinghies, comprising a valve body (2) which can be fixed hermetically at a hole provided in an impermeable sheet (15) which forms an inflatable item. An obturator (22) is associated with the valve body (2), controls the fluid connection inside the valve body and is elastically pushed so as to form a seal. The valve further comprises, on the obturator (22), a valve (30) for controlling the overpressure inside the inflatable item.

## Description

The present invention relates to a valve particularly for inflatable dinghies.

Conventional inflatable dinghies and inflatable items in general use valves to inflate the various compartments of the dinghy.

These valves, which are applied to the surface of the impermeable sheet, generally constituted by a rubberized fabric, must not only ensure a perfect seal but also be very compact although offering a sufficiently large air passage section.

Moreover, the valves must not protrude with respect to the surface and must allow easy opening while ensuring a constant seal over time.

Currently commercially available valves have not always proved themselves capable of fully solving the problem; moreover, they do not allow to ensure a maximum pressure inside the dinghy or the like, so that in order to ensure protection against overpressures it is necessary to resort to separately arranged valves.

The aim of the present invention is to solve the above problems by providing a valve particularly for inflatable dinghies which can have a very small size although achieving an excellent fluid passage section, when required, and is also substantially flush with the surface to which it is applied.

Within the scope of this aim, a particular object of the present invention is to provide a valve which has improved functionality and is also capable of solving the problem of overpressures.

Another object of the present invention is to provide a valve which by means of its particular constructive characteristics is capable of giving the greatest assurances of reliability and safety in use.

Another object of the present invention is to provide a valve which can be easily obtained starting from commonly commercially available elements and materials and is also competitive from a merely economical point of view.

This aim, these objects and others which will become apparent hereinafter are achieved by a valve particularly for inflatable dinghies, according to the present invention, comprising a valve body which can be fixed hermetically at a hole provided in an impermeable sheet which forms an inflatable item, an obturator being associated with said valve body, said obturator controlling the fluid connection inside said valve body and being elastically pushed so as to form a seal, characterized in that it comprises, on said obturator, a valve for controlling the overpressure inside said inflatable item.

Further characteristics and advantages of the present invention will become apparent from the following detailed description of a preferred but not exclusive embodiment of a valve particularly for inflatable dinghies, illustrated only by way of non-limitative example in the accompanying drawings, wherein:

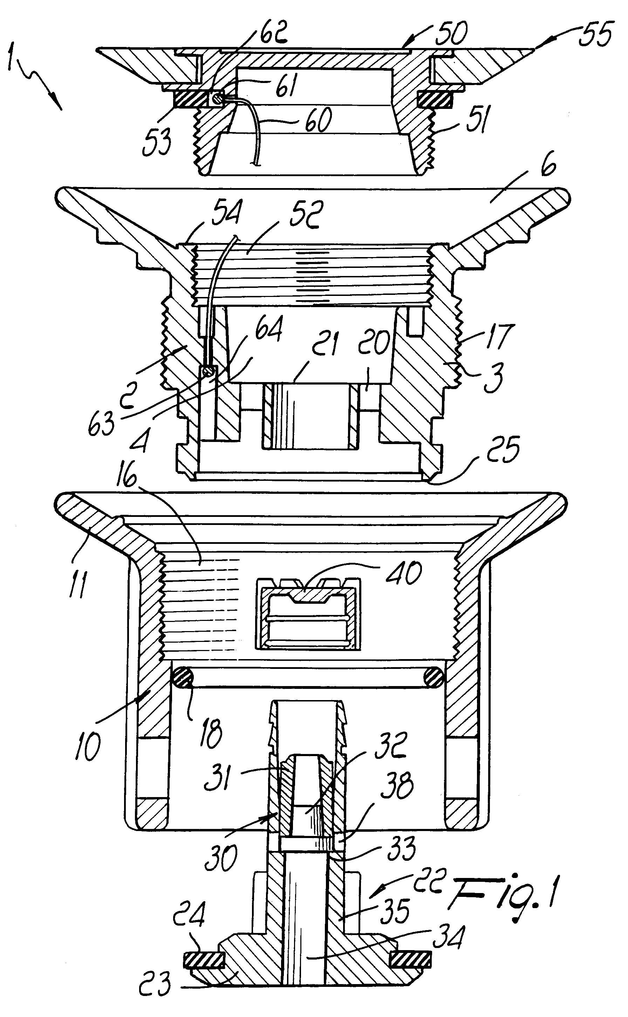

figure 1 is a schematic sectional exploded view of the valve according to the present invention;

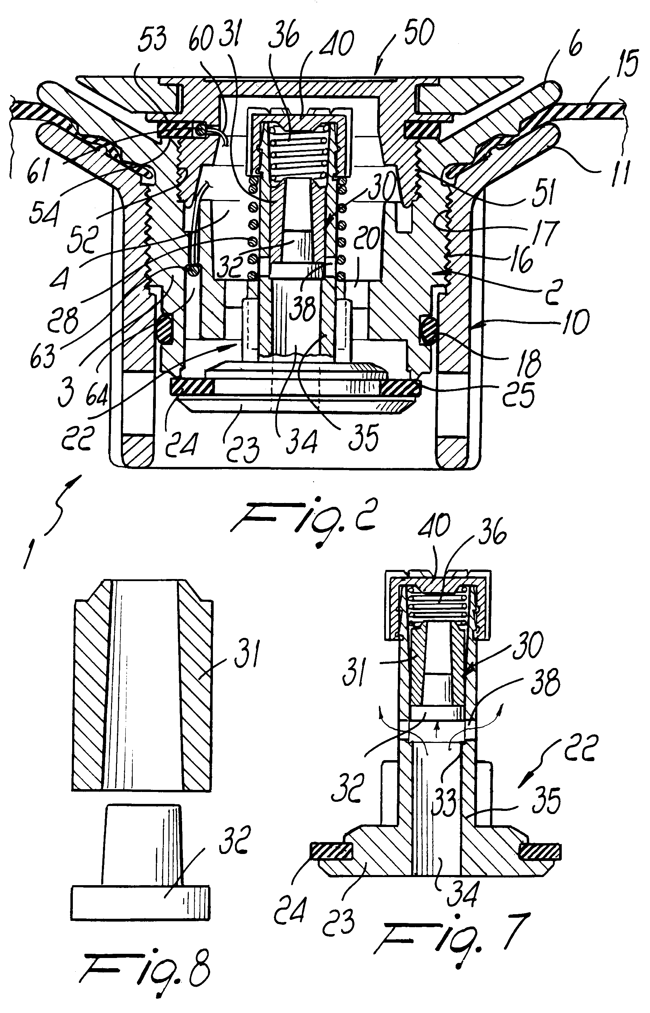

figure 2 is a sectional view of the valve in the closed position;

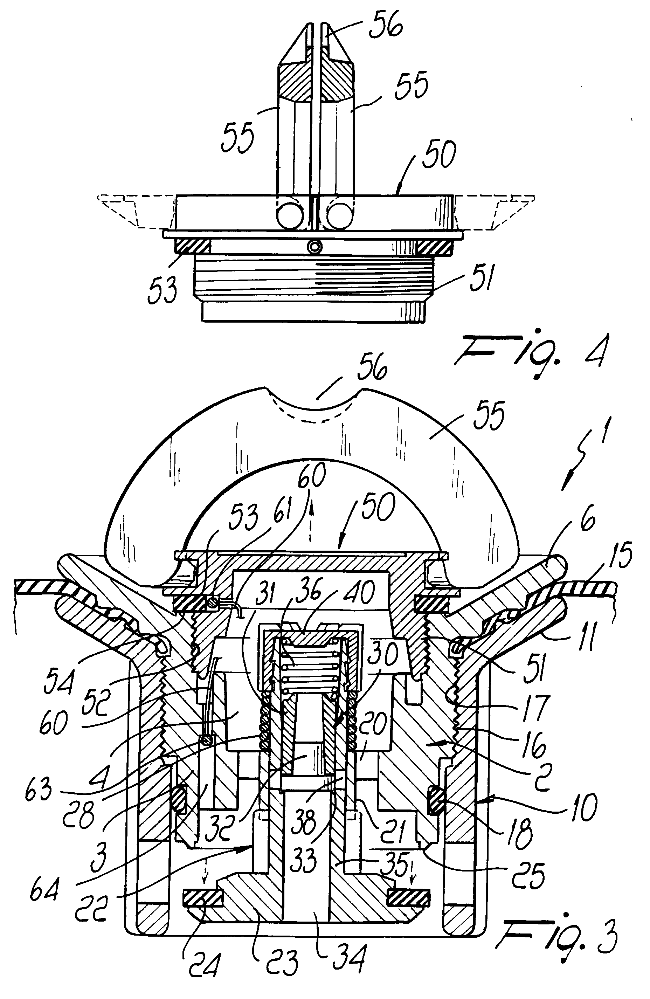

figure 3 is a sectional view of the valve with the obturator in the open position;
figure 4 is a view of the cap or cover which can be applied hermetically to the valve;

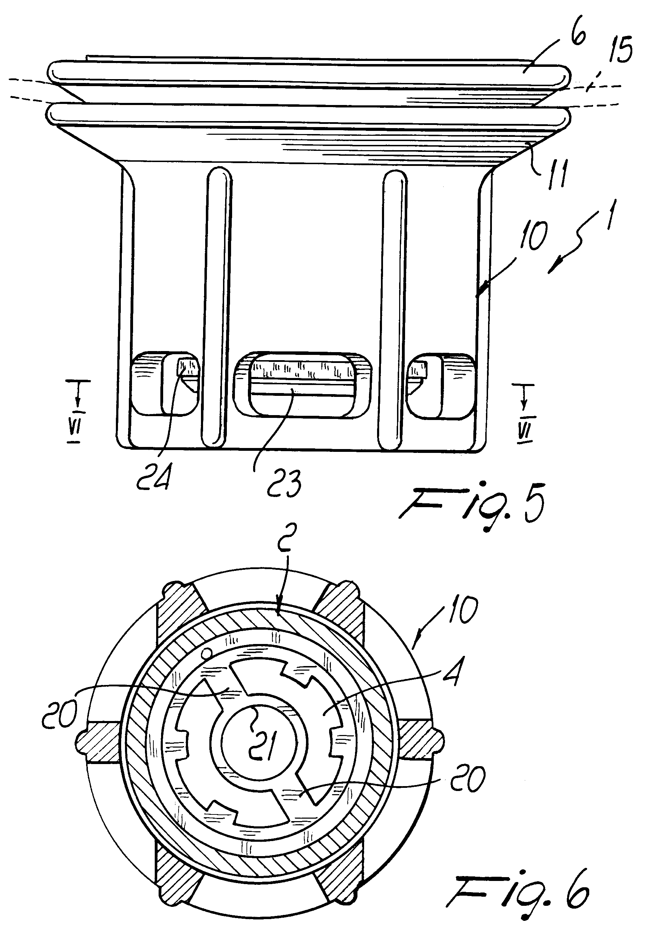

figure 5 is an elevation view of the valve;
figure 6 is a sectional view, taken along the plane VI-VI of figure 5;
figure 7 is a sectional view of the obturator, with the overpressure valve shown schematically in the open position;
figure 8 is a view of the detail of the piston and of the sealing gasket of the overpressure valve;
figure 9 is a sectional view of a different embodiment of the valve;
figure 10 is a view of the detail of the removable frame.

With reference to the above figures, the valve particularly for inflatable dinghies, according to the present invention, generally designated by the reference numeral 1, comprises a valve body 2 which has a cylindrical body 3 which internally forms a through channel 4 and has a frustum-shaped flared portion 6 at its outer rim.

A cup-shaped element 10 can be applied outside the valve body 2 and is provided, in an upward region, with a frustum-shaped wider portion 11 which mates with the frustum-shaped flared portion 6 in order to retain the impermeable sheet 15. The cup-shaped element 10 is provided with an internal thread 16 which engages a corresponding external thread 17 formed by the valve body 1; there is also provided an O-Ring 18 which provides the seal between the body 2 and the cup-shaped element 10.

The valve body 1 supports, by means of spokes 20, a central inlet 21 in which an obturator 22 slides, said obturator being provided with a disk 23 which supports a sealing gasket 24 which can engage against an annular sealing rim 25 formed at the lower end of the valve body 2.

The sealing action is applied by means of a spring 28 which keeps the gasket 24 elastically in abutment against the annular rim 25.

An important particularity of the invention resides in the fact that inside the obturator 22 there is provided an overpressure control valve 30, which is constituted by a piston 31 which pushes a gasket 32 which can engage an abutment 33 formed on the axial channel 34 of the stem 35 of the obturator 22.

The piston 31 is pushed by an overpressure spring 36 which keeps the gasket pressed against the abutment 33, closing the connection.

In case of overpressure, the pressure overcomes the contrast of the spring 36 and, by moving the gasket 32 away from the abutment 33, connects the inside of the inflatable item to the outlets 38 provided on the stem 35.

The overpressure spring 36 is advantageously kept in position by a cup or cap 40 which engages the end of the stem 35 and acts as an abutment for the overpressure spring.

The assembly is completed by a closure plug, designated by the reference numeral 50, which is provided with a threaded tang 51 which engages the internal thread 52 of the valve body and supports a plug gasket 53 which acts on an annular abutment 54 formed at the base of the flared portion 6. The presence of the threaded coupling of the plug allows to compensate for the aging and wear of the gasket 53 over time, providing an optimum seal at all times, differently from what occurs in the solutions of the prior art, in which the bayonet-type coupling of the plug allows only a limited recovery of compression.

The outer base of the plug 50 is substantially axially flush with respect to the flared portion and is provided with grip elements constituted by arc-shaped elements 55 which are substantially semicircular and surround the plug so as to remain seated, when inactive, in the region delimited by the frustum-shaped flared portion 6.

The arc-shaped elements 55 have a central notch 56 to facilitate their grip, so that they can be arranged at right angles to the base of the plug and facing each other, so as to provide an easy grip element for unscrewing the plug when the obturator must be accessed.

In normal operating conditions, the two arc-shaped elements 55 are arranged so that they are mutually co-planar and substantially flush with the region delimited by the flared portion 6, thus avoiding excess bulk.

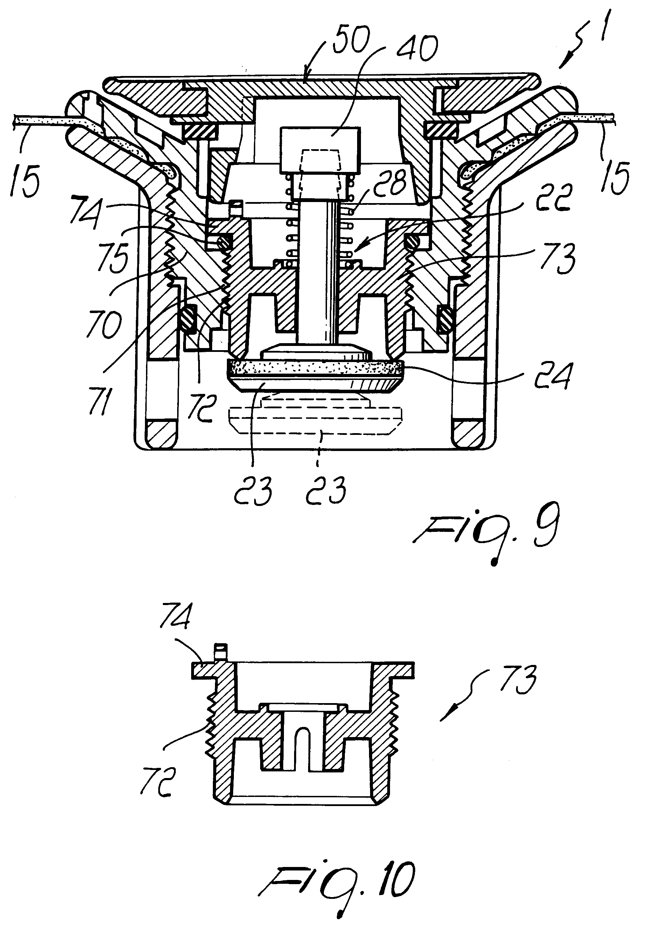

In a different embodiment, which is conceptually related to the preceding ones and is shown in figures 9 and 10, the body 3, now designated by the reference numeral 70, internally forms a threaded portion 71 for coupling to the outer thread 72 of a removable frame 73 which forms the region for supporting the obturator, which is again designated by the reference numeral 22 and is provided in a manner which is substantially similar to the one described above.

The frame 73, which has, in an upward region, a flange 74 for locking a sealing gasket 75, can be easily removed and consequently allows to easily repair any malfunction of said valve, which can be removed easily without having to act on the region for connection to the impermeable sheet. The connection provided also allows to facilitate the operation for impermeabilizing the dinghy internally, which can be performed by extracting the frame and accordingly the valve body and by applying the gun for injecting the impermeabilizing substance at the threaded portion 71.

The provision of the body 70 with an internal thread also allows to apply optional pressure and temperature control devices, which can optionally be integrated directly in the valve body.

From the above description it is thus evident that the present invention achieves the intended aim and objects; in particular, the fact is stressed that a valve is provided which, besides being compact is structured so that it does not protrude with respect to the surface of the dinghy or the like to which it is applied, yet offers easy grip of the cover.

Another important aspect is further constituted by the fact that the valve directly includes an overpressure control valve, so that it is possible to prevent the occurrence of overpressures without having to resort to an additional valve body.

It should be added to the above that in order to avoid the accidental loss of the plug there is provided an internal cord 60, in which one enlarged end 61 is located in a seat 62 which opens inward and is formed by the plug at the gasket 53; the other enlarged end 63 of said cord is located in a seat 64 formed inside the valve body 2, for example at the spokes 20.

This embodiment has the advantage that it does not have an external cord or wire, which can be a hindrance.

The invention thus conceived is susceptible of numerous modifications and variations, all of which are within the scope of the inventive concept.

All the details may also be replaced with other technically equivalent elements.

In practice, the materials employed, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A valve particularly for inflatable dinghies, comprising a valve body which can be fixed hermetically at a hole provided in an impermeable sheet which forms an inflatable item, an obturator being associated with said body, said obturator controlling the fluid connection inside said valve body and being elastically pushed so as to form a seal, characterized in that it comprises, on said obturator, a valve for controlling the overpressure inside said inflatable item.

2. A valve according to claim 1, characterized in that said valve body has a cylindrical body with a frustum-shaped flared portion at its outer axial end, a cup-shaped element being associable with said valve body and forming a frustum-shaped wider portion which can be mated with said frustum-shaped flared portion.

3. A valve according to claim 1, characterized in that said obturator comprises a disk which supports a sealing gasket and can engage against an annular sealing rim formed at the end of said valve body, a stem of said obturator being internally hollow and accommodating said overpressure control valve.

4. A valve according to claim 3, characterized in that said overpressure control valve comprises a piston which supports a gasket which can engage an abutment provided on an axial channel formed by said stem, external outlets being provided to a side of said abutment.

5. A valve according to claim 4, characterized in that it comprises an overpressure spring which acts between said piston and a cup which is applied to said stem.

6. A valve according to claim 2, characterized in that it comprises a closure plug for said valve body which has a threaded tang which can engage a corresponding thread formed by said valve body proximate to said frustum-shaped flared portion, said plug supporting a gasket which acts on an annular abutment formed at the base of said flared portion, said plug being suitable to be substantially flush with a region delimited by said frustum-shaped flared portion.

7. A valve according to claim 6, characterized in that it comprises arc-shaped portions which are hinged to said plug in substantially mutually diametrical points, said arc-shaped portions being arrangeable, when not in use, substantially flush with a plane formed by said plug and being arrangeable, when in use, substantially at right angles to the plane formed by said plug.

8. A valve according to claim 6, characterized in that it comprises a cord for retaining said plug which is connected between an internal seat of said plug and an internal seat formed by said valve body.

9. A valve according to claim 1, characterized in that said body internally forms a threaded portion for engagement with an outer threaded portion of a removable frame which supports said obturator.

10. A valve according to claim 9, characterized in that said threaded portion formed by said body is suitable for connection to a gun for injecting a substance for internally impermeabilizing an inflatable dinghy.
